# EUROPÄISCHE PATENTSCHRIFT

(11) **EP 0 369 524 B1**
(45) Veröffentlichungstag und Bekanntmachung des Hinweises auf die Patenterteilung: **22.06.1994**
(21) Anmeldenummer: 89202824.2
(22) Anmeldetag: 08.11.1989
(51) Int. Cl.: G02B 6/44

(54) **Schaltverteiler zur Herstellung von frei wählbaren optischen Steckverbindungen**
Distribution rack for making freely selectable optical connections
Rack de distribution pour l'établissement des connections optiques à option libre

(30) Priorität: 12.11.1988 DE 3838428
(43) Veröffentlichungstag der Anmeldung: 23.05.1990
(73) Patentinhaber: Philips Patentverwaltung GmbH, 22335 Hamburg (DE); Philips Electronics N.V., 5621 BA Eindhoven (NL)
(72) Erfinder: Becker, Johann Arnold, D-5063 Overath (DE); Deusser, Peter, D-5000 Köln 90 (DE); Holzmann, Olaf, D-5000 Köln 91 (DE)
(74) Vertreter: Erdmann, Anton, Dipl.-Ing.

(56) Entgegenhaltungen:
- EP-A- 0 116 480
- EP-A- 0 215 520
- EP-A- 0 215 668
- EP-A- 0 220 969
- EP-A- 0 226 805
- EP-A- 0 288 808
- EP-A- 0 341 027
- WO-A-85/04960
- DE-U- 8 809 714

## Beschreibung

Die Erfindung bezieht sich auf einen Schaltverteiler zur Herstellung von frei wählbaren optischen Steckverbindungen zwischen den Lichtwellenleitern, im weiteren LWL genannt, ankommender optischer Kabel und den LWL abgehender optischer Kabel mittels optischer Rangierleitungen.

Eine derartige Anordnung ist durch die EP-A 250 900 bekannt. Dort sind die Rangierleitungen einseitig mit den einzelnen Lichtwellenleitern (LWL) der in den Endabschlußeinheiten endenden LWL der abgehenden optischen Kabel unlösbar verspleißt. Das Steckerelement des freien Endes der Rangierleitungen ist in freier Wahl mit Steckanschlußelementen der ebenfalls in Endabschlußeinheiten endenden LWL der ankommenden optischen Kabel verbindbar. Die Rangierleitungen hängen frei. Sie bilden dabei Schlaufen entsprechend der für eine Schaltstrecke nicht benötigten Überlänge.

Ein Schaltverteiler zur Herstellung von frei wählbaren optischen Steckverbindungen zwischen den LWL ankommender und abgehender Kabel ist auch aus der Schrift EP-A-215 520 bekannt.

Insbesondere beim Aufbau eines LWL-Ortsnetzes müssen Schaltverteiler verfügbar sein, mittels welcher eine Vielzahl (z.B. 100) von LWL ankommender optischer Kabel (Hauptkabel) mit einer meist größeren Vielzahl (z.B. 200) LWL abgehender optischer Kabel in freier Kombinationsmöglichkeit verbunden werden können. Die Schaltverbindungen müssen bei Bedarf beliebig häufig geändert werden können. Solche Verbindungen werden mittels der Rangierleitungen hergestellt.

Die Rangierleitungen unterliegen dabei einer erheblichen mechanischen Beanspruchung. Beschädigungen können nicht ausgeschlossen werden, insbesondere dann nicht, wenn sie ungeordnet freihängend angebracht sind.

Eine Vielzahl freihängender ungeordneter Rangierleitungen erschwert darüberhinaus nachfolgende Verschaltungsarbeiten.

Bei einseitigem Spleißanschluß der Rangierleitungen an die LWL eines optischen Kabels muß bei einem erforderlichen Auswechseln der Rangierleitung eine neue Spleißstelle hergestellt werden. Dabei werden zwangsläufig die LWL der optischen Kabel verkürzt. Solche Nachspleißvorgänge sind natürlich nicht unbegrenzt häufig möglich und bedeuten darüberhinaus einen Eingriff in die Substanz der einen erheblichen Wert darstellenden optischen Kabel.

Der Erfindung liegt die Aufgabe zugrunde, einen Schaltverteiler der eingangs genannten Art derart zu gestalten, daß beliebige Schaltverbindungen einfach herstellbar sind. Dabei sollen Beschädigungen der Rangierleitungen weitgehend ausgeschlossen werden. Zumindest sollen derartige Beschädigungen keine nachteiligen Auswirkungen auf die in den Schaltverteiler geführten optischen Kabel haben.

Die Lösung gelingt durch die Merkmale des Anspruchs 1; sie beinhaltet, daß die LWL-Gruppen der ankommenden optischen Kabel mit einer ersten Gruppe einander benachbarter Endabschlußeinheiten verbunden sind, daß die LWL-Gruppen der abgehenden optischen Kabel mit einer zweiten Gruppe einander benachbarter Endabschlußeinheiten verbunden sind, daß die einzelnen LWL der ankommenden und der abgehenden Kabel mit an den Endabschlußeinheiten angeordneten optischen Steckanschlußelementen verbunden sind, daß die Rangierleitungen beidseitig mit Gegensteckerelementen verbunden sind, und daß die für die Herstellung einer jeweiligen Steckverbindung nicht benötigten überschüssigen Längenabschnitte der Rangierleitungen in Speicherelementen ablegbar sind.

Die LWL der in den Schaltverteiler geführten optischen Kabel werden fest mit den Steckerelementen der Endabschlußeinheiten verbunden. Nachfolgende Eingriffe in den optischen Leitungsweg zu den Steckerelementen sind nicht erforderlich, da Schaltverbindungen mit den Rangierleitungen ausschließlich über Steckverbinder hergestellt werden.

Die überschüssigen Leitungsabschnitte der Rangierleitungen hängen nicht frei und störend herum und können deshalb weder nachfolgende Schaltarbeiten behindern noch eine Gefahrenquelle für versehentliche Beschädigungen bilden.

Eine vorteilhafte Ausführungsform ist dadurch gekennzeichnet, daß die Endabschlußeinheiten als in den Schaltverteiler einschiebbare Einschübe ausgebildet sind, an welchen eine Gruppe von LWL entweder eines ankommenden oder eines abgehenden Kabels zugentlastet gehalten ist und welche Speicheraufnahmen zum Einlegen von zur Herstellung Von Spleißverbindungen benötigten Verfügungslängen der LWL aufweisen.

Für die Verbindungsarbeiten und insbesondere für die Verspleißung der LWL der optischen Kabel mit den LWL-Enden (pigtails) der Steckerelemente Wird die jeweilige auf Schubladenführungen im Schaltverteiler geführte Endabschlußeinheit herausgezogen, so daß die erforderlichen Arbeitsvorgänge an der frei zugänglichen Endabschlußeinheit unbehindert durchgeführt werden können.

Bei einer besonders vorteilhaften Ausführungsform ist vorgesehen, daß zumindest einem Teil der Endabschlußeinheiten Ablagehalterungen für eine der Anzahl der Steckanschlußelemente der Endabschlußeinheit entsprechende Anzahl von Speicherelementen räumlich zugeordnet sind.

Die unmittelbare Nähe der Ablagen für die Speicherelemente zu einem zugeordneten Steckanschlußelement einer Endabschlußeinheit bedeutet, daß der freie Führungsweg der Rangierleitungen sehr kurz und eine systematische Führungsordnung möglich ist.

Bei einer bevorzugten Anordnung sind die Ablagehalterungen Bestandteile der Endabschlußeinheiten. Dann sind die Führungswege einer Rangierleitung zu ihrem zugehörigen Steckanschlußelement besonders kurz und übersichtlich.

Im allgemeinen müssen nur Schaltverbindungen von einem LWL eines ankommenden Kabels zu einem LWL eines abgehenden Kabels hergestellt werden. Man benötigt dann maximal soviel Speicherelemente für Rangierleitungen, wie LWL ankommender Kabel vorhanden sind. Die Gesamtzahl der LWL der abgehenden Kabel kann dagegen sehr viel größer sein. Für diesen Fall ist eine vorteilhafte Lösung dadurch gekennzeichnet, daß die Ablagehalterungen den Endabschlußeinheiten für die ankommenden Kabel zugeordnet sind.

Jedem Steckanschlußelement eines LWL eines ankommenden Kabels kann dann ein bestimmter Ablageplatz für eine Rangierleitung zugeordnet werden. Ein Monteur weiß dann ohne Suchen, welche Rangierleitung er für einen bestimmten Schaltweg zu wählen hat. Dabei gibt sich automatisch eine günstiges Führungsmöglichkeit der Rangierleistung.

Eine raumsparende und einfach handhabbare Ausführungsart besteht darin, daß die Speicheraufnahmen und die Ablagehalterungen an gegenüberliegenden Seiten der Endabschlußeinheiten angeordnet sind.

Eine günstige Einlegemöglichkeit für die Speicherelemente ergibt sich dadurch, daß die Speicherelemente für die Rangierleitungen im wesentlichen in senkrechter Richtung zur Einschubrichtung für die Endabschlußeinheiten in deren Ablagehalterungen einlegbar sind. Dabei können die Ablagehalterungen so gestaltet sein, daß Speicherelemente von beiden Seiten der ausgezogenen Endabschlußeinheiten eingeschoben werden können.

Eine geordnete kreuzungsfreie Führung der Rangierleitungen im Bereich der Endabschlußeinheiten ist dadurch ermöglicht, daß den Ablagehalterungen Führungshalterungen für die von jedem Speicherelement ausgehenden Enden der Rangierleitungen zugeordnet sind.

Unzulässige Beanspruchungen und zu enge Krümmungen der von den Speicherelementen ausgehenden Enden der Rangierleitung werden dadurch beim Herausziehen einer Endabschlußeinheit vermieden, daß die Führungshalterungen derart an den Endabschlußeinheiten angeordnet sind, daß die zu anderen Endabschlußeinheiten zu führenden Enden der Rangierleitungen im vorderen Bereich einer Endabschlußeinheit frei und unbefestigt verlaufen.

Damit zwischen zwei Steckeranschlußelementen geführte Schaltlängen der Rangierleitung auf ihrem Wege gesichert gehalten werden können, ist vorgesehen, daß außerhalb des Ausziehbereiches der Endabschlußeinheiten Führungshalterungen zum Einlegen der Schaltlängen der Rangierleitungen Vorgesehen sind. Da die Rangierleitungen dabei nicht vor dem Bereich der Endabschlußeinheiten verlaufen, können sie Weder folgende Verlegungsarbeiten noch das Ausziehen der Endabschlußeinheiten behindern.

Eine bevorzugte Lösung ist dadurch gekennzeichnet, daß die Gruppen der Endabschlußeinheiten der ankommenden und der abgehenden Kabel in einer gemeinsamen Zeile angeordnet sind, und daß die Führungshalterungen für die Schaltlängen der Rangierleitungen, vorzungsweise beidseitig, neben der Zeile von Endabschlußeinheiten angeordnet sind.

Für die Speicherung der nicht benötigten Überlängen der Rangierleitung sind vorzugsweise Speicherelemente der in der DE-OS 37 06 518 beschriebenen Art geeignet. Dabei Werden Rangierleitungen durch einen S-förmigen Kanal ihrer Speicherelemente lose geführt und überschüssige Längen der Rangierleitungen sind parallel und gemeinsam um einen Wickelkern der Speicherelemente wickelbar.

Es hat sich weiterhin als vorteilhaft erwiesen, daß die Endabschlußeinheiten zwei Speicheraufnahmen aufweisen, von denen die erste zum Einlegen einer Speicherlänge der Gesamtheit der in der Endabschlußeinheit geführten LWL dient, Während in der zweiten Speicheraufnahme für die Herstellung der Spleißverbindungen zwischen den einzelnen LWL und den pigtail-LWL der Steckerelemente benötigte Verfügungslängen der LWL und der pigtail-LWL ablegbar sind.

In die erste Speicheraufnahme werden zunächst Verfügungslängen der von einem optischen Kabel zugeführten LWL abgelegt. Danach können zur Herstellung der Spleißverbindungen mit den pigtail-LWL der Steckanschlußelemente benötigte Verfügungslängen aus der ersten Speicheraufnahme gezogen und nach Fertigstellung der Spleißstellen gemeinsam mit den pigtail-LWL in der zweiten Speicheraufnahme abgelegt werden.

Die Erfindung und ihre Vorteile werden anhand der Beschreibung von in der Zeichnung dargestellten vorteilhaften Ausführungsbeispielen näher erläutert.
- Fig. 1: zeigt in vereinfachter perspektivischer Darstellung einen erfindungsgemäß aufgebauten Schaltverteiler.
- Fig. 2: zeigt prinzpartig ein Speicherelement für eine Rangierleitung.
- Fig. 3: zeigt eine perspektivische Ansicht der Oberseite einer Endabschlußeinheit.
- Fig. 4: zeigt eine perspektivische Ansicht der Unterseite einer Endabschlußeinheit.
- Fig. 5: zeigt schematisch den Einlegeverlauf einer Gruppe von mit Steckanschlußelementen verbundenen LWL in Speicheraufnahmen nach Fig. 4.

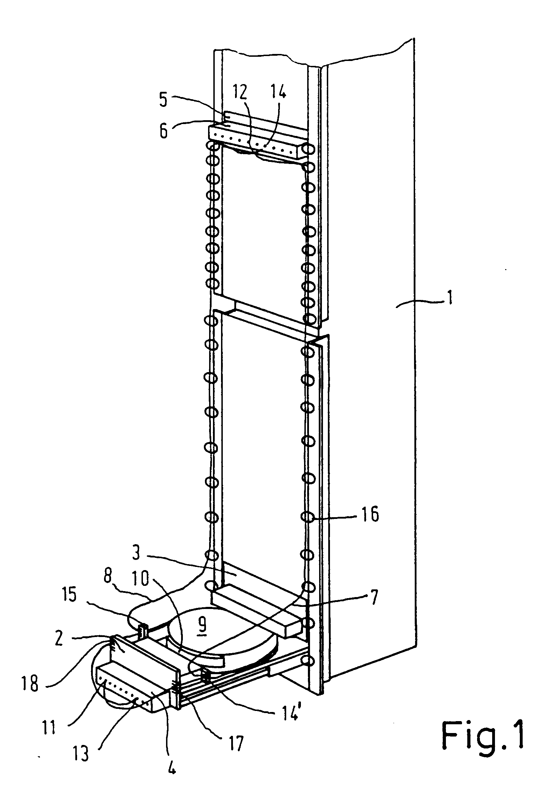

Im Gehäuse 1 des Schaltverteilers nach Fig. 1 sind im unteren Bereich Endabschlußeinheiten 2 und 3 sowie weitere nicht dargestellte übereinander und schubladenartig ausziehbar angeordnet. Die Endabschlußeinheit 2 ist in ausgezogenem Zustand dargestellt. Diese unteren Endabschlußeinheiten sind jeweils mit einer Gruppe von zehn zu einem Flachband zusammengefaßten LWL eines ankommenden optischen Kabels verbunden. Jeder dieser zehn LWL ist optisch mit einem Steckanschlußelement der Steckerleiste 4 verbunden.

Im oberen Bereich des Gehäuses 1 sind Endabschlußeinheiten 5 ausziehbar übereinander angeordnet, an deren Steckanschlußelementen an der Steckerleiste 6 jeweils zehn LWL eines abgehenden optischen Kabels enden. Diese LWL können auch wieder zu einem Flachband zusammengefaßt sein oder sie können einzelne LWL einer Bündelader sein.

Im allgemeinen ist die Anzahl der Endabschlußeinheiten 5 für abgehende Kabel größer als die entsprechende Anzahl für ankommende Kabel, da sehr viel mehr abgehende als ankommende optische Leitungen vorhanden sind. Von jedem Steckanschlußelement einer jeden unteren Endabschlußeinheit muß zu jedem beliebigen Steckanschlußelement einer jeden oberen Endabschlußeinheit eine optische Verbindung schaltbar sein. Dazu dienen einadrige Rangierleitungen 7 bzw. 8, welche beidseitig ein auf die Steckanschlußelemente der Steckerleisten 4 bzw. 6 passendes Gegensteckanschlußelement aufweisen. Die Länge der Rangierleitungen 7 und 8 entspricht dem längstmöglichen Schaltweg. Für kürzere Schaltwege nicht benötigte Längenabschnitte sind in flachen Speicherelementen 9 eingewickelt, von denen eine der Anzahl der Steckanschlußelemente einer Endabschlußeinheit 2 entsprechende Anzahl seitlich in Aufnahmehalterungen 10 einer Endabschlußeinheit 2 einschiebbar sind. Den oberen Endabschlußeinheiten 5 brauchen keine Speicherelemente zugeordnet zu werden, da nur maximal jeder der LWL der ankommenden Kabel mit je einem LWL der abgehenden Kabel zu verbinden ist.

Die Rangierleitung 7 stellt eine optische Verbindung zwischen den Steckanschlußelementen 11 und 12 her. Die Rangierleitung 8 verbindet die Steckanschlußelemente 13 und 14. In gleicher Weise können eine Vielzahl von Weiteren Schaltverbindungen auf beliebigem Wege hergestellt Werden. Auf ihrem Schaltweg sind die zu den oberen Endabschlußeinheiten 5 führenden Enden der Rangierleitungen 7 und 8, Welche von ihren Speicherelementen 9 ausgehend an Führungshalterungen 31 bzw. 15 festgelegt sind, außerhalb des Auszugsbereichs der Endabschlußeinheiten 2,3 und 5 am Rande des Gehäuses 1 in Führungshalterungen 16 eingelegt, welche als durch Einlegeschlitze geöffnete Ösen ausgebildet sind.

Im Bereich zwischen den Führungshalterungen 14 bzw. 15 einerseits und der die Rangierleitungen 7 bzw. 8 haltenden untersten Führungshalterung 16 ist eine geringe Freilänge vorzusehen, welche ein Ausziehen der Endabschlußeinheiten 2 bzw. 3 ohne unzulässige Krümmungen der Rangierleitungen erlaubt. Diese Freilänge kann dadurch kurz gehalten werden, daß die Aufnahmehalterungen 31 bzw. 15 von der Seite der Steckerleiste 4 zu den Speicherelementen 9 hin zurückversetzt angeordnet sind.

Die anderen Enden der Rangierleitungen 7 und 8 sind auf sehr kurzem Wege zu den Steckanschlußelementen 11 bzw. 13 geführt und außer in den zurückversetzten Führungshalterungen 31 bzw. 15 in weiteren Halteschlitzen 17 bzw. 18 geführt. Auf diesem kurzen Wege entstehen nur sanfte Krümmungen der Rangierleitungen, wenn insbesondere von links kommende Rangierleitungen zu einem auf der rechten Hälfte der Steckerleiste 4 befindlichen Steckanschlußelementen bzw. umgekehrt geführt werden. Bei der erfindungsgemäßen Anordnung nach Fig. 1 sind die Rangierleitungen auf geordneten Bahnen geführt, so daß die Gefahr einer Beschädigung gering ist. Der Bereich vor den Endabschlußeinheiten und deren Steckanschlußelementen ist stets frei zugänglich. Auch eine Vielzahl von Schaltverbindungen bleibt stets überschaubar und verfolgbar.

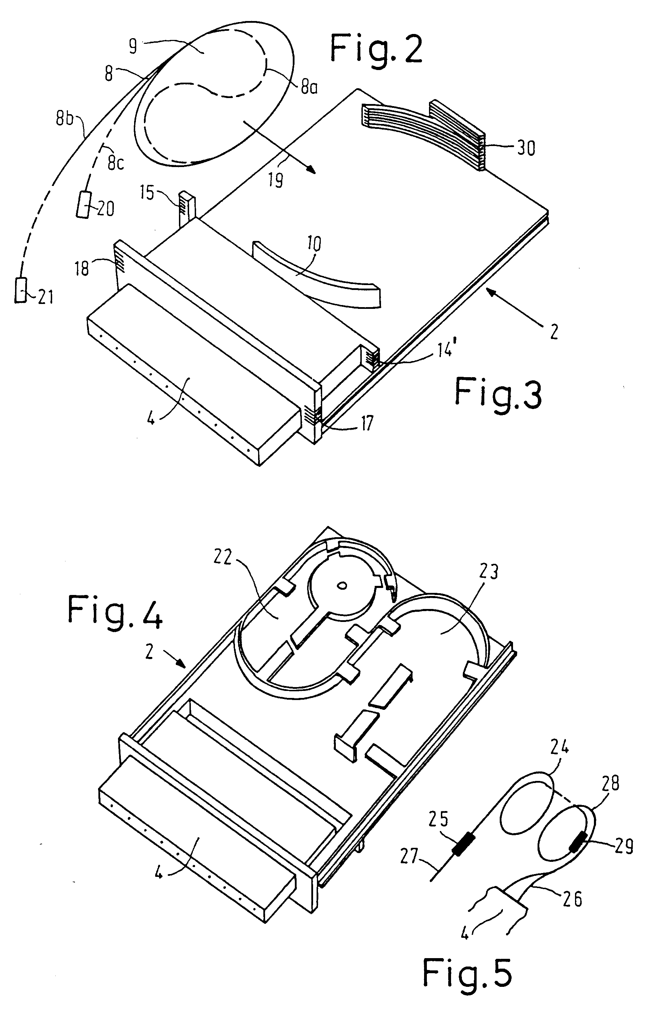

Aufbau und Funktion der Endabschlußeinheiten 2 und der zugeordneten Speicherelemente 9 werden anhand der Figuren 2 bis 5 näher erläutert.

In Fig. 3 ist eine Endabschlußeinheit 2 nach Fig. 1 in gleicher Lage vergrößert erkennbar. Dabei wurde zur besseren Verdeutlichung des erfindungsgemäßen Prinzips auf die Darstellung konstruktiver Einzelheiten verzichtet.

In Fig. 4 ist die Endabschlußeinheit 2 in um 180^{o} geschwenkter Lage dargestellt, so daß ihre in Fig. 1 nicht erkennbare Rückseite sichtbar wird.

Die Ablagehalterungen 10 und 30 für eine Mehrzahl von einzulegenden Speicherelementen 9, von denen eines in Fig. 2 angedeutet ist, bestehen jeweils aus zwei Teilen, einem ebenflächigen Teil und einem der kreisrunden Außenkontur der Speicherelemente 9 angepaßten gekrümmten Teil, welche bei den Ablagehalterungen 10 und 30 in umgekehrter räumlicher Folge übereinander angeordnet sind. In die Führungen der unteren Abschnitte können von rechts her fünf Speicherelemente 9 übereinander eingelegt werden, in die Führungen der oberen Abschnitte von links her in Richtung des Pfeils 19 ebenfalls fünf weitere Speicherelemente 9.

Im Speicherelement 9 (Fig. 2) ist die Rangierleitung 8 mit einem mittleren Bereich 8a durch einen S-förmigen Kanal des Speicherelements 9 geführt. Zur Erleichterung der Einlegbarkeit sind die Speicherelemente vorzugsweise zweiteilig ausgebildet. Durch das Zusammenfügen beider Teile wird der zunächst offen zugängliche Einlegekanal abgedeckt. ln eine radial nach außen offene Ringnut des Speicherelements 9 können danach beide Enden 8b und 8c gleichzeitig parallel eingewickelt werden. Dabei dient das kürzere Ende 8c mit dem Steckanschlußelement 20 zur Verbindung mit der Steckerleiste 4, während das längere Ende 8b mit dem Steckanschlußelement 21 zur Verbindung mit einer Steckerleiste 6 einer in Fig. 1 angedeuteten oberen Endabschlußeinheit 5 vorgesehen ist.

Da die Rangierleitung 8 im S-förmigen Kanal des Speicherelements 9 locker geführt ist, kann das Speicherelement nach dem Herstellen der Steckverbindungen und dem Einlegen der Enden 8b in die Führungshalterung 15 und der Enden 8c in die Führungshalterungen 15 und 18 in eine solche mittlere Längenposition der Rangierleitung geschoben werden, daß nicht benötigte Längen der Enden 8b und 8c beim nachfolgenden Aufwickeln in dem Speicherelement verschwinden.

In Fig. 4 sind auf der Rückseite der Endabschlußeinheit 2 Speicheraufnahmen 22 und 23 erkennbar. In die Speicheraufnahme 22 werden Windungen 24 (Fig. 5) eines ankommenden, zehn einzelne LWL enthaltenden LWL-Flachbandes 27, welches außer am Gehäuse 1 auch an einer Stelle 25 mit der Endabschlußeinheit 2 zugentlastet verbunden ist, spiralig hochkant eingelegt. Das Ende des LWL-Flachbandes 27 wird durch einen in der Zeichnung nicht erkennbaren Kanal in um 90^{o} gedrehter Flachlage in die Speicheraufnahme 23 geführt (gestrichelter Bereich in Fig. 5). Wenn Spleißverbindungen 29 mit den Pigtails 26 der Steckanschlußelemente der Steckerleiste 4 hergestellt werden sollen, wird eine benötigte Verfügungslänge der Windung 24 aus der Speicheraufnahme 23 herausgezogen. Die nach der Spleißung nicht mehr benötigten Überlängen der pigtails 26 und des Anteils des LWL-Flachbandes 27 werden in die Speicheraufnahme 23 abgelegt (vgl. Windung 28 in Fig. 5).

## Patentansprüche

1. Schaltverteiler zur Herstellung von frei wählbaren optischen Steckverbindungen zwischen den Lichtwellenleitern (LWL) ankommender optischer Kabel und den LWL abgehender optischer Kabel mittels mit Steckanschlußelementen versehener optischer Rangierleitungen (8),
- mit einem Gehäuse (1),
- mit mindestens einem im Gehäuse (1) schubladenartig angeordneten ersten Verteilergehäuse (2) für die ankommenden LWL
- mit am ersten Verteilergehäuse (2) angeordneten Steckanschlußelementen (Steckerleiste 4), mit welchen die LWL des ankommenden Kabels verbindbar sind,
- mit mindestens an einem der ersten Verteilergehäuse (2) angeordneten Speichern (22,23) zum Ablegen von zur Herstellung von Spleißverbindungen (29) benötigten Verfügungslängen der ankommenden LWL,
- mit mindestens einem im Gehäuse 1 schubladenartig angeordneten zweiten Verteilergehäuse (5) für die abgehenden LWL,
- mit am zweiten Verteilergehäuse (5) angeordneten Steckanschlußelementen, mit welchen die LWL des abgehenden Kabels verbindbar sind,
- mit mindestens an einem der zweiten Verteilergehäuse (5) angeordneten Speichern (22,23) zum Ablegen von zur Herstellung von Spleißverbindungen (29) benötigten Verfügungslängen der abgehenden LWL,
- mit Ablagehalterungen (10,30) für die Aufnahme von Speicherelementen (9) zum Speichern von mit Steckern (20,21) versehenen Rangierleitungen (8)
- sowie mit Führungen (14',15,16,17,18) für Schaltlängen der Rangierleitungen (9).

2. Schaltverteiler nach Anspruch 1
dadurch gekennzeichnet, daß zumindest an einem Teil (2) der Verteilergehäuse Ablagehalterungen (10,30) angeordnet sind.

3. Schaltverteiler nach Anspruch 2,
dadurch gekennzeichnet, daß die Anzahl der an einem Verteilergehäuse angeordneten Ablagehalterungen (10,30) der Anzahl der am Verteilergehäuse angeordneten Steckerelemente (11,13) gleich ist.

4. Schaltverteiler nach Anspruch 2 oder 3,
dadurch gekennzeichnet, daß Ablagehalterungen (10,30) an den ersten Verteilergehäusen (2) für die ankommenden Kabel angeordnet sind.

5. Schaltverteiler nach einem der Ansprüche 3 bis 4,
dadurch gekennzeichnet, daß die Speicher (22,23) einerseits und die Ablagehalterungen (10,30) andererseits an gegenüberliegenden Seiten einer Bodenwand der Verteilergehäuse (2) angeordnet sind.

6. Schaltverteiler nach einem der Ansprüche 3 bis 5,
dadurch gekennzeichnet, daß die Ablagehalterungen (10,30) für die Speicherelemente (9) der Rangierleitungen (7,8) derart ausgebildet sind, daß die Speicherelemente (9) im wesentlichen quer zur Einschubrichtung des Verteilergehäuses (2) einlegbar sind.

7. Schaltverteiler nach einem der Ansprüche 3 bis 6,
dadurch gekennzeichnet, daß den Ablagehalterungen (10,30) Führungshalterungen (14',15,17,18) für die von jedem Speicherelement (9) ausgehenden Enden (8b,8c) der Rangierleitungen (8) zugeordnet sind.

8. Schaltverteiler nach Anspruch 7,
dadurch gekennzeichnet, daß die Führungshalterungen (14,15) derart an den Verteilergehäusen (2) angeordnet sind, daß die zu anderen Verteilergehäusen (5) zu führenden Enden (8b) der Rangierleitungen (8) im vorderen Bereich eines Verteilergehäuses (2) frei und unbefestigt verlaufen.

9. Schaltverteiler nach einem der Ansprüche 1 bis 8,
dadurch gekennzeichnet, daß die Gruppen der Verteilergehäuse (2 bzw.5) der ankommenden und der abgehenden Kabel in einer gemeinsamen Zeile angeordnet sind, und daß Führungshalterungen (16) für die Schaltlängen der Rangierleitungen (7,8) vorzugsweise beidseitig neben der Zeile von Verteilergehäusen (2,5) angeordnet sind.

10. Schaltverteiler nach einem der Ansprüche 1 bis 9,
dadurch gekennzeichnet, daß in die Ablagehalterungen (10,30) Speicherelemente (9) mit darin gespeicherten, beidseitig mit Steckern (20,21) versehenen Rangierleitungen (7,8) abgelegt sind.

11. Schaltverteiler nach Anspruch 10,
dadurch gekennzeichnet, daß die Speicherelemente (9) einen Wickelkern mit einem S-förmig durch den Kern verlaufenden Kanal aufweisen, und daß durch den S-förmigen Kanal Rangierleitungen (7,8) lose geführt sind, und daß überschüssige Längen der Rangierleitungen (7,8) parallel und gemeinsam um den Wickelkern der Speicherelemente (9) gewickelt sind.

12. Schaltverteiler nach einem der Ansprüche 1 bis 11,
dadurch gekennzeichnet, daß ein Verteilergehäuse (2) zwei Speicher (22,23) aufweist, von denen der erste (22) zum Einlegen einer Speicherlänge der Gesamtheit der in das Verteilergehäuse (2) geführten LWL (27) dient, während im zweiten Speicher (23) Verfügungslängen ablegbar sind, welche für die Herstellung der Spleißverbindungen (29) zwischen den einzelnen LWL und den pigtail-LWL (26) der Steckanschlußelemente erforderlich sind.

## Claims

1. A switch box for establishing freely selectable optical plug and socket connections between the optical waveguides (OWGs) of incoming optical cables and the OWGs of outgoing optical cables by means of optical jumpers (8) having connector elements, said switch box comprising
- a housing (1),
- at least one first termination unit (2) for the incoming OWGs, which is arranged like a drawer in the housing (1),
- connector elements (multipoint connectors 4) which are arranged at the first termination unit (2) and to which the OWGs of the incoming cable can be connected,
- storage elements (22, 23) which are arranged at minimally one of the first termination units (2) and which are used for storing available lengths of incoming OWGs necessary for the manufacture of spliced joints (29),
- at least one, second termination unit (5) for the outgoing OWGs, which is arranged like a drawer in the housing 1,
- connector elements which are arranged at the second termination unit (5) and to which the OWGs of the outgoing cables can be connected,
- storage elements (22, 23) which are arranged at minimally one of the second termination units (5) and which are used for storing available lengths of outgoing OWGs necessary for the manufacture of spliced joints (29),
- storage holders (10, 30) for storing storage elements (9) which are used for storing jumpers (8) comprising connectors (20, 21), and
- guiding elements (14', 15, 16, 17, 18) for the switching lengths of the jumpers (9).

2. A switch box as claimed in Claim 1, characterized in that storage holders (10, 30) are arranged at least at a part (2) of the termination units.

3. A switch box as claimed in Claim 2, characterized in that the number of storage holders (10, 30) arranged at a termination unit corresponds to the number of connector elements (11, 13) of said termination unit.

4. A switch box as claimed in Claim 2 or 3, characterized in that storage holders (10, 30) are arranged at the first termination units (2) for the incoming cables.

5. A switch box as claimed in Claim 3 or 4, characterized in that the storage spaces (22, 23) and the storage holders (10, 30) are provided on opposite sides of the bottom of the termination units (2).

6. A switch box as claimed in any of the Claims 3 to 5, characterized in that the storage holders (10, 30) for the storage elements (9) of the jumpers (7, 8) are constructed so that the storage elements (9) can be provided substantially perpendicularly to the direction of insertion of the termination unit (2).

7. A switch box as claimed in any of the Claims 3 to 6, characterized in that the storage holders (10, 30) are provided with guiding elements (14, 15, 17, 18) for the ends (8b, 8c) of the jumpers (8) leaving each storage element (9).

8. A switch box as claimed in Claim 7, characterized in that the guiding elements (14', 15) are provided on the termination units (2) in such a manner that the ends (8b) of the jumpers (8) to be guided to other terminal units (5) extend freely and unconnectedly in the front area of a termination unit (2).

9. A switch box as claimed in anyone of the Claims 1 to 8, characterized in that the groups of termination units (2 and 5, respectively) of the incoming and outgoing cables are arranged in a common row and that guiding elements (16) for the switching lengths of the jumpers (7, 8) are provided, preferably on both sides, beside the row of termination units (2, 5).

10. A switch box as claimed in any one of the Claims 1 to 9, characterized in that storage elements (9) in which jumpers (7, 8) having connectors (20, 21) on both sides are stored are provided in the storage holders (10, 30).

11. A switch box as claimed in Claim 10, characterized in that the storage elements (9) have a winding core with an S-shaped channel extending though the core, and in that jumpers (7, 8) are guided loosely through the S-shaped channel, and that excess lengths of the jumpers (7, 8) can be wound collectively and parallel to each other around the winding core of the storage elements (9).

12. A switch box as claimed in any one of the Claims 1 to 11, characterized in that a termination unit (2) comprises two storage spaces (22, 23) of which the former (22) serves to receive an excess length of the overall length of the OWGs (27) guided in the termination unit (2), while in the second storage space (23) available lengths required for the production of the spliced connections (29) between the individual OWGs and the pigtail-OWGs (26) of the connector elements can be stored.

## Revendications

1. Dispositif de distribution pour réaliser des connexions optiques par fiches pouvant être choisies librement entre les guides de lumière de câbles optiques entrants et les guides de lumière de câbles optiques sortants au moyen de lignes d'aiguillage optiques (8) munies d'éléments de fiche, comportant
- un boîtier (1)
- au moins un premier boîtier de distribution (2) disposé en tiroir dans le boîtier (1) pour les guides de lumière entrants,
- des éléments de fiche (réglette de raccordement par fiches 4) associés au premier boîtier de distribution (2), auxquels peuvent être reliés les guides de lumière du câble entrant,
- au moins des espaces de stockage (22, 23) associés à l'un des premiers boîtiers de distribution (2) pour stocker des longueurs disponibles des guides de lumière entrants nécessaires pour établir des épissures (29),
- au moins un deuxième boîtier de distribution (5) disposé en tiroir dans le boîtier (1) pour les guides de lumière sortants,
- des éléments de fiche associés au deuxième boîtier de distribution (5), auxquels peuvent être reliés les guides de lumière du câble sortant,
- au moins des espaces de stockage (22, 23) associés à l'un des deuxièmes boîtiers de distribution (5) pour stocker des longueurs disponibles des guides de lumière sortants nécessaires pour établir des épissures (29),
- des supports de stockage (10, 30) conçus pour la réception d'éléments de stockage (9) pour stocker des lignes d'aiguillage (8) munies de fiches (20, 21),
- aussi bien que des guidages (14', 15, 16, 17, 18) pour des longueurs de commutation des lignes d'aiguillage (9).

2. Dispositif de distribution selon la revendication 1, caractérisé en ce que des supports de stockage (10, 30) sont associés au moins à une partie (2) du boîtier de distribution.

3. Dispositif de distribution selon la revendication 2, caractérisé en ce que le nombre de supports de stockage (10, 30) associés à un boîtier de distribution est égal au nombre d'éléments de fiche (11, 13) associés au boîtier de distribution.

4. Dispositif de distribution selon la revendication 2 ou 3, caractérisé en ce que les supports de stockage (10, 30) sont associés aux premiers boîtiers de distribution (2) pour les câbles entrants.

5. Dispositif de distribution selon la revendication 3 ou 4, caractérisé en ce que les espaces de stockage (22, 23) d'une part et les supports de stockage (10, 30) d'autre part sont associés à des surfaces opposées d'une paroi de fond du boîtier de distribution (2).

6. Dispositif de distribution selon l'une quelconque des revendications 3 à 5, caractérisé en ce que les supports de stockage (10, 30) pour les éléments de stockage (9) des lignes d'aiguillage (7, 8) sont conçus de manière que les éléments de stockage (9) peuvent être introduits de façon sensiblement transversale à la direction d'introduction du boîtier de distribution (2).

7. Dispositif de distribution selon l'une quelconque des revendications 3 à 6, caractérisé en ce que sont associés aux supports de stockage (10, 30) des supports de guidage (14', 15, 16, 17, 18) pour les extrémités (8b, 8c) des lignes d'aiguillage (8) sortant de chaque élément de stockage (9).

8. Dispositif de distribution selon la revendication 7, caractérisé en ce que les supports de guidage (14, 15) sont fixés aux boîtiers de distribution (2) de manière que les extrémités (8b) des lignes d'aiguillage (8) à guider vers d'autres boîtiers de distribution (5) s'étendent librement et de façon non fixée dans la zone de front d'un boîtier de distribution (2).

9. Dispositif de distribution selon l'une quelconque des revendications 1 à 8, caractérisé en ce que les groupes de boîtiers de distribution (2 respectivement 5) des câbles entrants et des câbles sortants sont disposés dans une rangée commune et en ce que les supports de guidage (16) pour les longueurs de commutation des lignes d'aiguillage (7, 8) sont disposés avantageusement des deux côtés de la rangée de boîtiers de distribution (2, 5).

10. Dispositif de distribution selon l'une quelconque des revendications 1 à 9, caractérisé en ce que sont introduits dans les supports de stockage (10, 30) des éléments de stockage (9) dans lesquels sont insérées des lignes d'aiguillage (7, 8) dont les deux extrémités sont munies de fiches (20, 21).

11. Dispositif de distribution selon la revendication 10, caractérisé en ce que les éléments de stockage (9) présentent un noyau de bobinage comportant un canal en S s'étendant dans le noyau, en ce que des lignes d'aiguillage (7, 8) sont guidées librement par le canal en S, et en ce que des longueurs excessives des lignes d'aiguillage (7, 8) sont enroulées ensemble et parallèlement autour du noyau de bobinage des éléments de stockage (9).

12. Dispositif de distribution selon l'une quelconque des revendications 1 à 11, caractérisé en ce qu'un boîtier de distribution (2) présente deux espaces de stockage (22, 23) dont le premier est conçu pour recevoir une longueur de stockage de la longueur totale du guide de lumière (27) introduit dans le boîtier de distribution (2), alors que peuvent être insérées dans le deuxième espace de stockage (23) des longueurs disponibles nécessaires pour l'établissement des épissures (29) entre les guides de lumière individuels et les guides de lumière en queue de cochon (26) des éléments de fiche.
